(19) Europäisches Patentamt
European Patent Office
Office européen des brevets

(11) EP 2 575 072 B1

(12) EUROPEAN PATENT SPECIFICATION

(45) Date of publication and mention
of the grant of the patent:
**05.11.2014 Bulletin 2014/45**

(51) Int Cl.:
*G06K 7/00* (2006.01)     *G06K 19/07* (2006.01)
*G06K 19/077* (2006.01)     *H01Q 1/22* (2006.01)

(21) Application number: **11306233.5**

(22) Date of filing: **27.09.2011**

(54) **Dual mode smart card with common antenna**

Dualmodus-Chipkarte mit gemeinsamer Antenne

Carte intelligente en mode double avec antenne commune

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.04.2013 Bulletin 2013/14**

(73) Proprietor: **Oberthur Technologies**
**92700 Colombes (FR)**

(72) Inventors:
• **Le Garrec, Loïc**
**35500 Vitre (FR)**
• **Duval, Agnès**
**35500 Vitre (FR)**
• **Titova Candel, Olga**
**92220 Bagneux (FR)**

(74) Representative: **Santarelli**
**49, avenue des Champs Elysées**
**75008 Paris (FR)**

(56) References cited:
**US-A- 5 608 417       US-A1- 2005 134 318
US-A1- 2009 261 662     US-B1- 6 321 067
US-B2- 7 167 080**

## Description

The present invention relates to an electronic entity, such as a contactless smart card, capable of generating an electric current when brought into an electromagnetic field.

Document US 5,608,417 against which the claims are delimited, discloses a transponder system employing antenna with a distributed inductance and capacitance that exhibit parallel and series resonant frequencies.

Document US 6,321,067 discloses a power transmission system, an IC card, and an information communication system using an IC card wherein power is transmitted by radio from the power transmission device to the IC card.

Document US 7,994,659 discloses a method of supplying electrical energy from a first electronic circuit to a second electronic circuit connected via a communication interface, which interface comprises at least one wire line within a radio frequency identification communication device.

Document US 7,167,080 discloses a memory tag responsive to a signal generated by a reader, the tag comprising a resonant circuit part being variable in accordance with data to be transmitted being variable to transmit data to the reader.

Document WO 2008/047338 discloses a smart card comprising a coil antenna and two contactless transaction chips. This document aims at solving the problem of de-tuning of coil antennas in contactless smart cards.

Such a de-tuning problem occurs when a contactless smart card comprises several coil antennas for respective contactless transaction chips. When the smart card is brought into an electromagnetic field, it has to be determined which contactless chip is to be used for communicating with the reading entity generating the electromagnetic field. For this purpose, in an initial stage, all the contactless chips are activated along with their respective coil antenna to detect whether the electromagnetic field generated corresponds to their functionality (payment or travel pass for example). The common activation of the coil antennas creates interference between them which leads to a loss of sensitivity of each antenna.

In order to solve this specific problem, document WO 2008/047338 provides a smart card with two contactless chips commonly coupled to the same antenna and which do not respond at the same time when entering an electromagnetic field.

However, in the smart card disclosed in document WO 2008/047338, the contactless chips are coupled in parallel with the antenna.

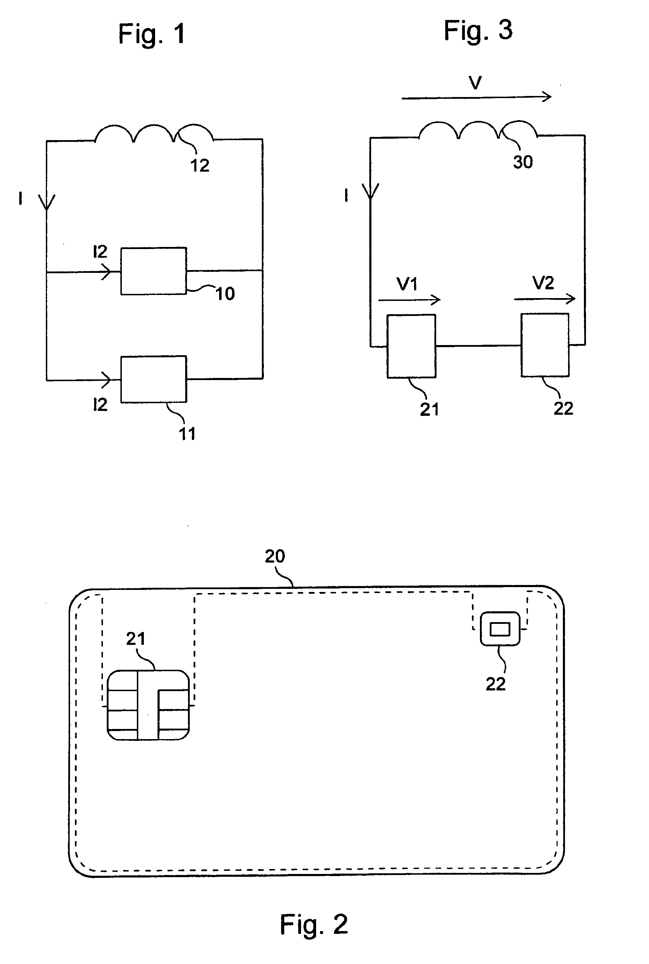

With this configuration, the current needed to be generated by the coil antenna is high since in fact, as shown in Figure 1, each chip 10, 11 is fed with a respective current I1, I2 lower than the current I generated by the coil antenna 12. Indeed, in the parallel configuration we have I = I1 + I2.

Thus, there is a need for reducing the current to be generated by an antenna in a smart card comprising chips commonly coupled to said antenna.

According to the invention there is provided an electronic entity according to claim 1.

With the configuration of the electronic entity according to the present invention, the modules are fed with a same current generated by the contactless current generating unit. This same current may originate directly from the contactless current generating unit or may be output by electronic means disposed between the modules and the contactless current generating unit.

According to the present invention, since the modules are fed with the same current, the dimensioning of the contactless current generating unit does not depend on the repartition of the current between the modules.

Compared with the parallel configuration of Figure 1, the contactless generating unit does not have to generate a current as high as current I but only as high as the greater current between 11 and 12.

According to one or more embodiments, the said same current the modules are fed with is the current directly generated by the contactless current generating unit.

Hence, dimensioning the antenna is less complex since only the current needed for operation of the modules is to be taken into account.

For example, the modules are coupled in series with the contactless current generating unit.

Implementing such a configuration may be less complex.

According to embodiments, the said contactless current generating unit comprises an antenna.

Thus the said contactless current generating unit may be integrated into a communication unit of the electronic entity thereby simplifying the overall structure thereof.

For example, the antenna is a magnetic antenna with inductive coupling.

Implementing this kind of antenna may be less complex.

At least one module may be configured to communicate data through said antenna.

Thus, the electronic entity may be used as a smart card in applications such as banking, travel passes, tolls etc.

For example, a first module is configured to communicate through said antenna according to a first protocol and a second module is configured to communicate through said antenna according to a second protocol different from the first protocol.

Thus, the collisions of respective communications of the modules may be avoided.

For example, each module is configured to behave as a capacitor when another module is communicating through said antenna.

Thus, the modules do not interfere in between them.

According to embodiments, the contactless current generating unit comprises a coil.

Thus, implementation of the overall entity may be less complex. The antenna may comprise the coil.

For example, at least one of the modules comprises an electronic chip, which may be a contactless or a dual chip.

This may correspond to smart card implementations.

According to a second aspect of the invention, there is provided a smart card comprising an electronic entity according to the first aspect.

For example, each module may be dedicated to a respective application.

Thus, the smart card may comprise several applications which do not conflict with each other.

Other features and advantages of the invention will become apparent from the following description of non-limiting exemplary embodiments, with reference to the appended drawings, in which:

- Figure 2 is a schematic illustration of a smart card according to an embodiment;

- Figure 3 is a schematic illustration of the electrical circuit equivalent to the smart card of Figure 2; and

- Figures 4a and 4b illustrate the state of the chips of the smart card of Figure 2 during operation.

With reference to Figure 2, there is described an electronic entity according to an embodiment. In this illustrative embodiment, the electronic entity is a smart card. However, electronic entities according to other embodiments may be of other kinds such as mobile phones, tablet computers etc. Such a smart card is configured to communicate with one or more card readers (not represented) which can emit an electromagnetic field. The smart card has a coil antenna that is configured to generate an electric current when the smart card is in the electromagnetic field. Each reader emits a specific electromagnetic field provided for enabling the reader and a specific chip of the smart card to communicate one with one other.

The turns of the coil antenna may be made up of copper winding or conducting vias disposed in between physical layers of the smart card. The number of turns for the antenna determines the capacitance of the antenna. If there is a higher capacitance, the number or turns is decreased. Introducing a chip in a circuit reduces the resonance frequency of the antenna. Thus, the more the capacitance of the chip is high, the less the number of turn of the antenna is high.

A base level of capacitance is needed to get a signal from a reader. In the parallel arrangement represented in Figure 1, the overall capacitance of the two chips is higher than the overall capacitance of the circuit represented in Figure 2. The overall capacitance for the circuit of Figure 1 is $C_{10} + C_{11}$ ($C_{10}$ and $C_{11}$ being the respective capacitances of chips 10 and 11), whereas the overall capacitance for the circuit of Figure 2 is

$$\frac{C_{20} \times C_{21}}{C_{20} + C_{21}}$$ ($C_{20}$ and $C_{21}$ being the respective capacitances of chips 20 and 21).

There is a balance between the capacitance of the chip and the number of turns of the antenna. For example, an ISO 14443-2 smart card with a dual chip having a capacitance of 56 pF, a contactless chip having a capacitance of 34 pF and a resonance frequency of 17 MHz the antenna may have 4 turns.

Returning to Figure 2, the smart card 20 has a dual chip 21 and a contactless chip 22. The two chips 21 and 22 are connected to an antenna (represented in dotted lines) in series. The equivalent circuit is represented in Figure 3.

The smart card may comprise any other number of modules which may comprise other elements than electronic chips. For example, the antenna may be associated with a resonating module in order to amplify the electrical signal received and transmitted by the antenna. The resonating module may take the form of a copper via in a dielectric material. The vias may have a width of 0.15 mm and have a spiral shape with a distance of 0.15 mm between each turn. The resonating module should be disposed close to the antenna's turns, for example at a distance of less than 0.15 mm.

For example, the smart card operates at a frequency below 100 MHz and the communication frequencies are comprised between 1 MHz and 50 MHz or 13MHz and 15 MHz.

According to embodiments of the smart card, wherein the dimensions of the card do not exceed 10 cm, the card readers associated with the smart card can communicate with it at a distance of 6 cm to 10 cm approximately which corresponds to the wavelength of the antenna. For a frequency of 100 MHz, the wavelength is 3 m.

Figure 3 schematically represents the electrical circuit of the smart card of Figure 2. The modules 21 and 22 are connected in series with a coil antenna 30.

As shown in Figure 3, a same current I flows through modules 21 and 22. The sum of the respective voltages V1 and V2 of the modules 21 and 22 is the overall voltage V of the coil antenna. The voltage V is set so that voltages V1 and V2 are high enough to bias the chips so they can be recognised by a reader emitting an external electromagnetic field generating the current I in the coil antenna.

The inventors have found that the frequency of the electromagnetic field of the reader each chip is configured to communicate with, the equivalent capacity of the chips and the number of turns of the antenna can be balanced so there is optimal dual function of the smart card.

It is assumed that the chips are provided for different applications and that they carry out anti-collision functionalities in order not to operate at the same time with an electromagnetic field of a reader. Thus, the risk of mismatching data between the two chips is reduced.

For example, one of the chips is a banking (payment) chip and the other chip is a travel pass chip. The corresponding readers are thus an automatic teller machine (or Cash Machine) and a ticket machine.

However, the chips and the smart card of the present embodiment are not limited to these applications and the invention may be applicable to other applications such as identification or door opening. For example, the invention can have applications in road toll payments or any other situation where banking actions occur in addition to user identification, for example paying for underground/metro tickets.

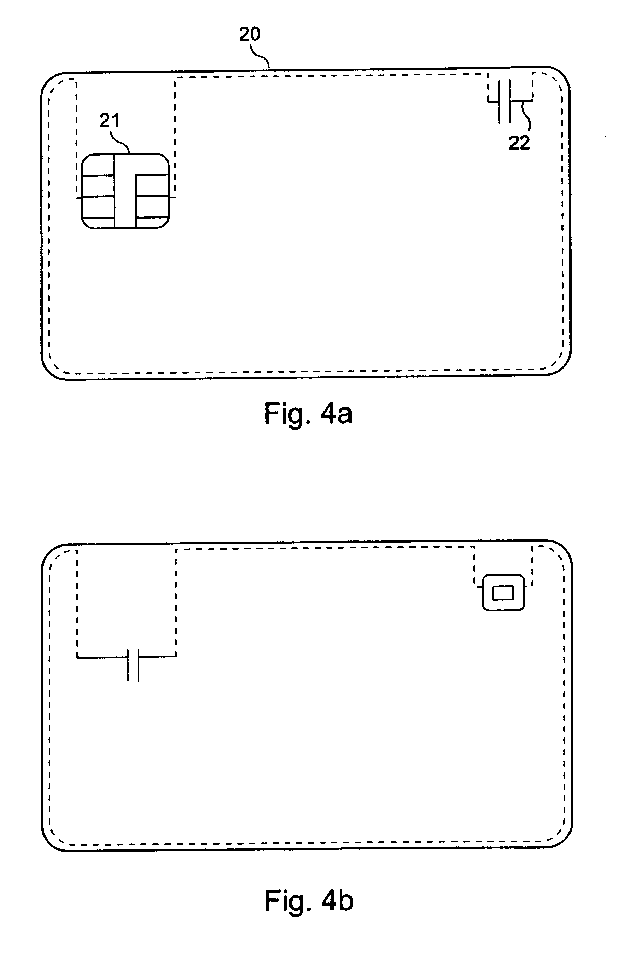

As illustrated in Figure 4a, when the dual chip 21 of Figure 2 is in use (for example communicating with a reader emitting an electromagnetic field), the contactless chip 22 is in a standby phase and behaves as a capacitor in the circuit of Figure 3. Inversely, as illustrated in Figure 4b, when the dual chip 22 of Figure 2 is in use (for example communicating with a reader emitting an electromagnetic field), the contactless chip 21 is in a standby phase and behaves as a capacitor in the circuit of Figure 3. Thus, only one application (banking or travel pass) is available at a time.

When the smart card is brought into an electromagnetic field generated by a reader, the latter may recognize the chip it is configured to communicate with according to the protocol by the way the chips modulates its communication signals.

Indeed, the chips may use different protocols so that an antenna of the reader can recognize one chip or the other. For example, the well known ISO 14443 Type A and ISO 14443 Type B protocols use different types of modulation. Type A signals have a 100% modulation where the signal is either 1 or 0. Type B signals may be 10% modulated - there may be some level of background signal, it is not on or off.

One advantage of having the chips in series is that the same maximum current value generated in the antenna can be kept for the two chips. As shown in figure 3, the same current flow through modules 21 and 22 whereas in the prior art, as shown in Figure 1, the current generated in the antenna is divided into weaker currents.

The voltage generated by the antenna is split into voltages V1 and V2 but these voltages may be enough to bias the chips since one main parameter to activate a chip is the current consumption, less than the voltage.

## Claims

1. An electronic entity (20) comprising:

a magnetic antenna (30) with inductive coupling configured to generate an electric current (I) when the electronic entity (20) is brought into an external electromagnetic field, and
a plurality of modules (21, 22) coupled to said magnetic antenna (30),
wherein the current (I) generated by said magnetic antenna (30) is fed in series to a first one of said plurality of modules (21) and to a second one (22) of said plurality of modules; and **characterized in that**:
the first module (21) is configured to communicate through said antenna according to a first protocol and the second module (22) is configured to communicate through said antenna according to a second protocol different from the first protocol.

2. An electronic entity according to claim 1, wherein at least one module is configured to communicate data through said antenna (30).

3. An electronic entity according to any one of claims 1 and 2, wherein each module is configured to operate in a standby mode when another module is communicating through said antenna, each module in a standby mode presenting an equivalent capacitance to the module communicating through said antenna.

4. An electronic entity according to any one of the preceding claims, wherein the magnetic antenna comprises a coil.

5. An electronic entity according to any one of the preceding claims, wherein at least one of the modules comprises an electronic chip.

6. An electronic entity according to any one of the preceding claims, wherein at least one module comprises a contactless chip.

7. An electronic entity according to any one of the preceding claims, wherein at least one module comprises a dual chip.

8. A smart card comprising an electronic entity according to any one of the preceding claims.

9. A smart card according to claim 8, wherein each module is dedicated to a respective application.

## Patentansprüche

1. Elektronische Einheit (20), die umfasst:

eine magnetische Antenne (30) mit induktiver Kopplung, die konfiguriert ist, um einen elektrischen Strom (I) zu erzeugen, wenn die elektronische Einheit (20) in eine externes elektromagnetisches Feld gebracht wird, und eine Vielzahl von Modulen (21, 22), die mit der Magnetantenne (30) gekoppelt sind, wobei der von der magnetischen Antenne (30) erzeugte Strom (I) der Reihe nach in ein erstes der Vielzahl von Modulen (21) und ein zweites (22) der Vielzahl von Modulen eingespeist wird; und

**dadurch gekennzeichnet, dass**:

das erste Modul (21) konfiguriert ist, um durch die Antenne gemäß einem ersten Protokoll zu kommunizieren, und das zweite Modul (22) konfiguriert ist, um durch die Antenne gemäß einem zweiten Protokoll, das sich von dem ersten Protokoll unterscheidet, zu kommunizieren.

2. Elektronische Einheit nach Anspruch 1, wobei wenigstens ein Modul konfiguriert ist, um Daten durch die Antenne (30) zu kommunizieren.

3. Elektronische Einheit nach einem der Ansprüche 1 und 2, wobei jedes Modul konfiguriert ist, um in einer Bereitschaftsbetriebsart zu arbeiten, wenn ein anderes Modul durch die Antenne kommuniziert, wobei jedes Modul in einer Bereitschaftsbetriebsart eine gleich hohe Kapazität darstellt wie das Modul, das gerade durch die Antenne kommuniziert.

4. Elektronische Einheit nach einem der vorangehenden Ansprüche, wobei die magnetische Antenne eine Spule umfasst.

5. Elektronische Einheit nach einem der vorangehenden Ansprüche, wobei wenigstens eines der Module einen elektronischen Chip umfasst.

6. Elektronische Einheit nach einem der vorangehenden Ansprüche, wobei wenigstens ein Modul einen berührungslosen Chip umfasst.

7. Elektronische Einheit nach einem der vorangehenden Ansprüche, wobei wenigstens ein Modul einen dualen Chip umfasst.

8. Smartcard bzw. intelligente Karte, die eine elektronische Einheit nach einem der vorangehenden Ansprüche umfasst.

9. Smartcard nach Anspruch 8, wobei jedes Modul für eine jeweilige Anwendung bestimmt ist.

## Revendications

1. Entité électronique (20) comprenant :

une antenne magnétique (30) avec un couplage inductif configurée pour générer un courant électrique (I) lorsque l'entité électronique (20) est amenée dans un champ électromagnétique externe, et une pluralité de modules (21, 22) couplés à ladite antenne magnétique (30), dans laquelle le courant (I) généré par ladite antenne magnétique (30) est fourni en série à un premier module (21) de ladite pluralité de modules et à un deuxième module (22) de ladite pluralité de modules ; et **caractérisée en ce que** :

le premier module (21) est configuré pour communiquer par l'intermédiaire de ladite antenne selon un premier protocole et le deuxième module (22) est configuré pour communiquer par l'intermédiaire de ladite antenne selon un deuxième protocole différent du premier protocole.

2. Entité électronique selon la revendication 1, dans laquelle au moins un module est configuré pour communiquer des données par l'intermédiaire de ladite antenne (30).

3. Entité électronique selon l'une quelconque des revendications 1 et 2, dans laquelle chaque module est configuré pour fonctionner dans un mode d'attente lorsqu'un autre module communique par l'intermédiaire de ladite antenne, chaque module dans un mode d'attente présentant une capacitance équivalente au module communiquant par l'intermédiaire de ladite antenne.

4. Entité électronique selon l'une quelconque des revendications précédentes, dans laquelle l'antenne magnétique comprend une bobine.

5. Entité électronique selon l'une quelconque des revendications précédentes, dans laquelle au moins l'un des modules comprend une puce électronique.

6. Entité électronique selon l'une quelconque des revendications précédentes, dans laquelle au moins un module comprend une puce sans contact.

7. Entité électronique selon l'une quelconque des revendications précédentes, dans laquelle au moins un module comprend une puce double.

8. Carte à puce comprenant une entité électronique selon l'une quelconque des revendications précédentes.

9.   Carte à puce selon la revendication 8, dans laquelle chaque module est dédié à une application respective.

EP 2 575 072 B1

Fig. 1

Fig. 3

Fig. 2

7

Fig. 4a

Fig. 4b

**EP 2 575 072 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5608417 A
- US 6321067 B
- US 7994659 B
- US 7167080 B
- WO 2008047338 A